Europäisches Patentamt

European Patent Office

Office européen des brevets

(11) Veröffentlichungsnummer: **0 180 206 B1**

(12) **EUROPÄISCHE PATENTSCHRIFT**

(45) Veröffentlichungstag der Patentschrift: **02.12.92**

(21) Anmeldenummer: **85113771.1**

(22) Anmeldetag: **29.10.85**

(51) Int. Cl.⁵: **H02B 1/20**

(54) **Paketierte Sammelschiene.**

(30) Priorität: **02.11.84 DE 3440008**

(43) Veröffentlichungstag der Anmeldung:
**07.05.86 Patentblatt 86/19**

(45) Bekanntmachung des Hinweises auf die
Patenterteilung:
**02.12.92 Patentblatt 92/49**

(84) Benannte Vertragsstaaten:
**AT BE DE NL**

(56) Entgegenhaltungen:
**EP-A- 0 043 931**
**DE-A- 2 554 732**
**DE-U- 8 030 672**
**FR-A- 2 453 521**

(73) Patentinhaber: **Licentia Patent-**
**Verwaltungs-GmbH**
**Theodor-Stern-Kai 1**
**W-6000 Frankfurt/Main 70(DE)**

(72) Erfinder: **Bohnenberger, Willy, Dipl.-Ing.**
**Goethestrasse 8**
**W-6451 Mainhausen 2(DE)**
Erfinder: **Haxel, Gerd, Ing.grad.**
**Danziger Strasse 38**
**W-6453 Seligenstadt(DE)**
Erfinder: **Krüger, Joachim, Ing.grad.**
**Kastanienstrasse 5**
**W-6452 Hainburg(DE)**
Erfinder: **Steuernagel, Gernot, Ing.grad.**
**Schöffenstrasse 8**
**W-6050 Offenbach(DE)**

(74) Vertreter: **Lertes, Kurt, Dr. et al**
**Licentia Patent-Verwaltungs-GmbH Theodor-**
**Stern-Kai 1**
**W-6000 Frankfurt/M 70(DE)**

# Beschreibung

Die Erfindung bezieht sich auf eine paketierte Sammelschiene mit einem Kunststoffgehäuse, bestehend aus einem Bodenteil, zwei Längsseitenwänden, wobei die Längsseitenwände über das Bodenteil hinausragende elastische Verlängerungsabschnitte aufweisen, die jeweils einander zugewandte abgewinkelte Enden aufweisen, wobei an die Innenflächen der abgewinkelten Enden mindestens ein Paar mit einem Träger verbindbare Befestigungsteile, die kürzer als das Kunststoffgehäuse sind, mit Längsränderabschnitten unter der durch einen in den Raum zwischen den Verlängerungsbschnitten ragenden federnden Vorsprung erzeugten Federspannung andrückbar sind.

Eine Vorrichtung der vorstehend beschriebenen Art ist bekannt (DE-U-8 030 672). Das Kunststoffgehäuse der bekannten Vorrichtung trägt ein flaches Kabel, dessen Leiter teilweise blank sind und mit Kontaktstiften eines Kontaktelements in Verbindung gebracht werden können. Die Befestigungsteile weisen zylindrische Verbindungsteile auf, mit denen sie in einem willkürlichen Abstand an einer Wand oder Decke angebracht werden.

Bekannt ist auch eine paketierte Sammelschiene mit einem Kunststoffgehäuse, das ein Bodenteil, zwei parallel Längsseitenwände und im Inneren parallel zu den Längsseitenwänden verlaufende Trennwände enthält, durch die Kammern gebildet werden, in denen jeweils Stromschienen isoliert voneinander angeordnet sind.

Die Sammelschienen werden aus einem extrudierten Kunststoffprofil hergestellt, das auf die gewünschte Länge der Stromschienen abgeschnitten wird. Eine Anpassung an die jeweils benötigte Stromschienenlänge ist daher auf einfache Weise möglich. Im Bodenteil der Sammelschiene sind nach unten und nach der Seite hin offene Nuten vorgesehen, die einen kreuzförmigen Querschnitt haben. In den Nuten können Gewindestreifen eingesetzt sein, in die zur Befestigung der Sammelschienen an Tragelementen Schrauben eingefügt werden (DE-A-25 54 732).

Der Erfindung liegt die Aufgabe zugrunde, eine Sammelschiene der eingangs beschriebenen Art so weiterzuentwickeln, dass diese als selbsttragende und an den Stirnseiten elektrisch isolierte Einheit einfach und schnell an ebenen, im Abstand voneinander auf gleichem Niveau angeordneten Trägern befestigt werden kann.

Die Aufgabe wird erfindungsgemäss dadurch gelöst, dass die Längsseitenwände parallel zueinander und parallel zu im Inneren des Kunststoffgehäuses angeordneten Trennwänden verlaufen, durch die Kammern gebildet werden, in denen jeweils Stromschienen isoliert voneinander angeordnet sind, dass von den abgewinkelten Enden Vorsprünge in das Innere der Längsränderabschnitte ragen, und dass eine der Trennwände vor dem Übergang zum Bodenteil mit einem verbreiterten Wandabschnitt versehen ist, in dem sich eine längliche Ausnehmung für selbstschneidende Schrauben befindet, mit denen an den Stirnseiten des Kunststoffgehäuses Deckel anschraubbar sind, die sich im Raum unterhalb des Bodenteils der Kammern in zwei Endplatten gabeln, die je in einen Schlitz in den Längsränderabschnitten einsetzbar sind.

Da die Zwischenplatten an ihren vorgesehenen Einbaustellen durch laterales Auseinanderspeisen der Verlängerungsabschnitte in das Kunststoffgehäuse eingefügt werden können, ist eine Längsverschiebung der Zwischenplatten im Kunststoffgehäuse nicht mehr nötig. Die Zwischenplatten können vor der Befestigung an einem Träger mit dem Kunststoffgehäuse verbunden werden.

Sie werden an der Einbaustelle durch den federnden Vorsprung kraftschlüssig gehalten und bilden mit dem Kunststoffgehäuse jeweils eine für sich handhabbare Einheit. Zur Montage der Sammelschienen werden die Enden der Verlängerungsabschnitte auf die krallenartig gebogenen Längsränderabschnitte der Befestigungsplatten gedrückt. Dabei spreizen sich die Verlängerungsabschnitte auseinander, bis die abgewinkelten Enden die Höhe der Stirnseiten der Zwischenplatten erreicht haben. Danach federn die Verlängerungsabschnitte in ihre zu den übrigen Teilen der Längsseitenwände fluchtende Stellung zurück, wobei die krallenartigen Längsränderabschnitte in ihre von den Vorsprüngen festgelegte Lage gelangen und in dieser festgehalten werden.

Die Deckel verhindern eine unerwünschte Relativbewegung in axialer Richtung zwischen der paketierten Sammelschiene und den Zwischenplatten. Es ist günstig, wenn die Sammelschiene an einem Ende auf die vorstehend beschriebene Weise an einer Zwischenplatte befestigt wird, während an mindestens einer zweiten Stelle eine gegen den zweiten Deckel zurückgesetzte Zwischenplatte mit der Sammelschiene verbunden ist. Eine solche Befestigung lässt Längsausdehnungen der paketierten Sammelschiene, z. B. infolge von steigenden Temperaturen, zu.

Vorzugsweise ist der in den Raum zwischen den Verlängerungsabschnitten ragende, federnde Vorsprung als vom Bodenteil der Kammern schräg ausgehende Zunge ausgebildet. Bei dieser Ausführungsform hat die Zunge eine ausreichende Länge, so dass ein hinreichender Weg für die Auslenkung der Zunge vorhanden ist, wenn die Zwischenplatte eingesetzt wird.

Die Zwischenplatte ist zweckmässigerweise wenigstens mit einer in der Mitte angeordneten Gewindebohrung versehen. Die Zwischenplatte kann wahlweise von zwei Seiten aus auf einem Träger angeschraubt werden, bevor eine Sammelschiene aufgesteckt wird.

Vorzugsweise geht ein Quervorsprung an einer Längsseitenwand in einen die äussere Kammer für die Stromschienen begrenzenden Wandabschnitt über, der bis zum Bodenteil im Abstand vom Verlängerungsabschnitt parallel zu diesem verläuft. Bei dieser Vorrichtung weist der eine Verlängerungsabschnitt eine grössere Höhe als der andere Verlängerungsabschnitt auf. Damit lässt sich eine verbesserte Federwirkung erreichen. Der höhere Verlängerungsabschnitt kann den Hauptanteil an der federnden Auslenkung beim Montieren der Sammelschiene übernehmen. Es ist möglich, den zweiten Verlängerungsabschnitt sehr kurz auszubilden. Der von den Verlängerungsabschnitten benötigte Raumbedarf ist daher gering.

Die Stromschienen weisen vorzugsweise vorspringende Stifte und/oder Messer auf, die im Abstand voneinander angeordnet sind und nicht über die Längsseitenwände und stirnseitigen Deckel hinausragen. Mit Aufsteckelementen lassen sich deshalb berührungssichere Leitungsverbindungen herstellen. Die Sammelschiene eignet sich auch für höhere Spannungen, z. B. Netzspannung. Um die Abmessungen der Sammelschienen zu reduzieren, ist es zweckmäßig, die Stromschienen aus Kupfer herzustellen, das aus einem mindestens einmal um 180° gefalteten Kupferband besteht und ausreichend hart ist, um Anschlußstecker in Faston-Technik zuzulassen.

Der Erfindung wird im folgenden an Hand eines in einer Zeichnung dargestellten Ausführungsbeispiels näher erläutert, aus dem sich weitere Merkmale sowie Vorteile ergeben.

Es zeigen:

Figur 1      einen Querschnitt durch eine paketierte Sammelschiene,

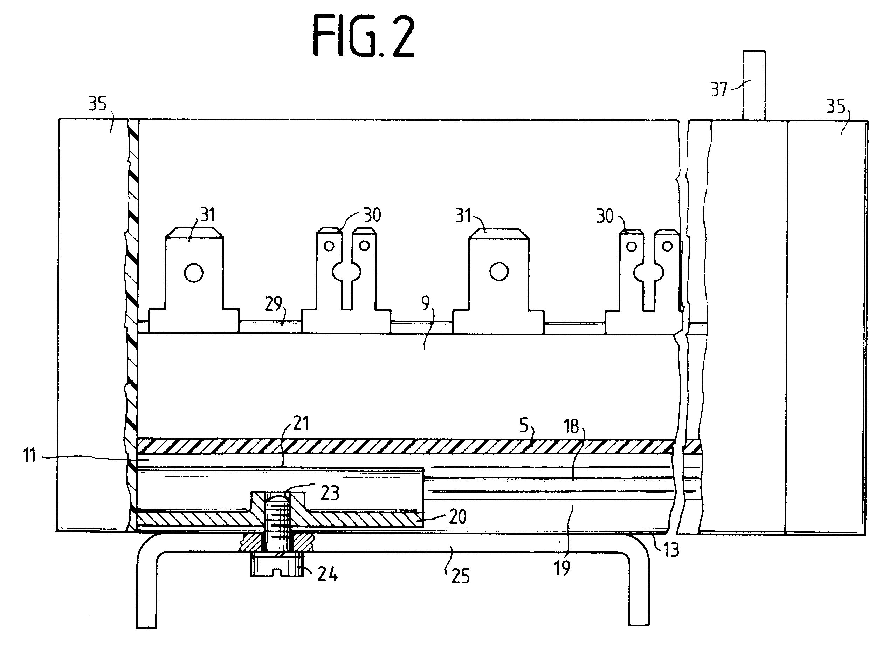

Figur 2      eine Ansicht der in Figur 1 dargestellten Anordnung von der Seite, teilweise im Schnitt, längs der Linien I - I,

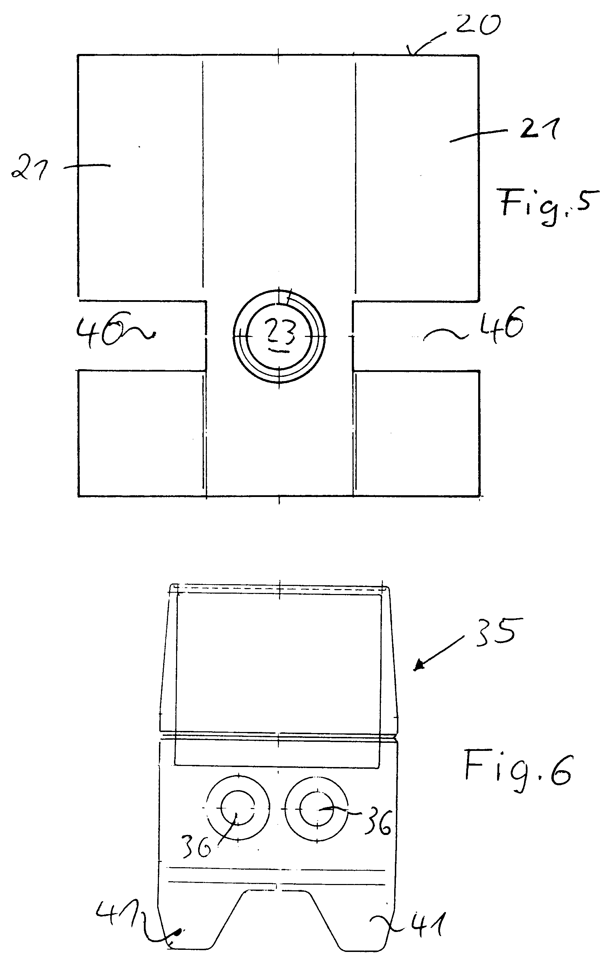

Figur 3      eine Ansicht der in Figur 1 dargestellten Anordnung von vorne.

Figur 4      einen Querschnitt durch eine andere Ausführungsform eines Kunststoffgehäuses für eine paketierte Sammelschiene,

Figur 5      eine Zwischenplatte für eine paketierte Sammelschiene von oben,

Figur 6      einen Deckel für die Abdeckung der Stirnseiten eines Kunststoffgehäuses der paketierten Sammelschiene von vorne,

Figur 7      eine andere Ausführungsform einer paketierten Sammelschiene im Querschnitt,

Figur 8      eine Stromschiene im Querschnitt.

Eine paketierte Sammelschiene 1 weist ein Kunststoffgehäuse 2 auf, das zwei Längsseitenwände 3, 4, ein Bodenteil 5 und im Inneren zwei Trennwände 6, 7 enthält, die parallel zu den Längsseitenwänden 3, 4 verlaufen. Die Längsseitenwände 3, 4 und die Trennwände 6, 7 bilden Kammern 8, in die Stromschienen 9 eingefügt sind, die vorzugsweise aus Kupfer bestehen. Die Stromschienen 9 sind durch die Trennwände 6, 7 voneinander isoliert. Von den Längsseitenwänden 3, 4 gehen Verlängerungsabschnitte 10, 11 aus, die über das Bodenteil 5 ein Stück hinausragen. Die Verlängerungsabschnitte 10, 11 weisen rechtwinklig umgebogene Enden 12, 13 auf. Beiderseits der inneren Ecken 14, 15 der abgewinkelten Enden 12, 13 verlaufen in Längsrichtung des Gehäuses 4 Rastvorsprünge 16, 17 bzw. 18, 19. Die Rastvorsprünge 16, 17 bzw. 18, 19 befinden sich jeweils in einem Abstand von den Ecken 14, 15.

Eine Zwischenplatte 20 hat zwei krallenartig umgebogene Längsränderabschnitte 21, die sich in Längsrichtung des Gehäuses 2 erstrecken. Die Abmessungen der Zwischenplatte 20 sind an den Raum zwischen den Verlängerungsabschnitten 10, 11 angepaßt. Die Stirnseiten 22 der Längsränderabschnitte 21 befinden sich in gleicher Höhe in einer Ebene, die in etwa mit der durch die Oberfläche der Zwischenplatte 20 verlaufenden Ebene übereinstimmt.

Die krallenartig abgebogenen Längsränderabschnitte 21 sind je zwischen die Rastvorsprünge 16, 17 bzw. 18, 19 eingedrückt. Die Stirnseiten 22 der Längsränderabschnitte 21 liegen dabei an den inneren, nicht näher bezeichneten Flächen der Enden 12, 13 an. Das Gehäuse 2 besteht aus einem elastischen Material. Die Lücke zwischen den Rastvorsprüngen 16, 17 und 18, 19 ist jeweils so groß gewählt, daß sich die Längsränderabschnitte 21 nur durch eine gewisse elastische Verformung der Rastvorsprünge 16, 17 bzw. 18, 19 in die Lücken einschieben lassen. Durch die elastische Verformung werden auf die Längsränderabschnitte 18, 19 Haltekräfte ausgeübt. In der Mitte der Zwischenplatte 20 ist eine Gewindebohrung 23 vorgesehen, in die eine Schraube 24 eingesetzt wird, mit der die Zwischenplatte 20 an einem Träger 25 angeschraubt werden kann.

Von den Längsseitenwänden 3, 4 ragen Vorsprünge 26, 27 ins Innere des Gehäuses 2. Die Vorsprünge 26, 27 können sich in gleicher Höhe befinden. Mindestens eine Trennwand 6 bzw. 7 weist Vorsprünge 28, 29 auf, die in die Kammern 8 ragen. Die Vorsprünge 28, 29, die sich in gleicher Höhe wie der Vorsprung 26 befinden, gehen von einander entgegengesetzten Seiten der Trennwände 6 bzw. 7 aus. Die Vorsprünge 26, 28 und 29 besitzen nicht näher bezeichnete, dem Bodenteil 5 zugewandte Flächen, deren Abstand vom Bodenteil 5 der Höhe der Stromschiene 9 entspricht. Die Stromschienen 9 sind in die Räume zwischen dem Bodenteil 5 und den Vorsprüngen 26, 28 und 29 eingesetzt. Zwischen den einander gegenüberstehenden Seiten der Vorsprünge 26 und 28 bzw. 28 und 29 bzw. 29 und 27 befindet sich jeweils ein Lücke, die kleiner als die Stärke der Stromschiene 9 ist. Durch die Lücken ragen Stifte 30 und Messer 31, die an den Stromschienen 9 befestigt sind. Die Stifte 30 und Messer 31 enden unterhalb der Längsseitenwände 3, 4 und der Trennwände 6, 7. An den Stiften 30 und den Messern 31, die jeweils im Abstand voneinander in Längsrichtung der Stromschienen 9 sind, werden bedarfsweise Leitungen mit Hilfe von Steckschuhen befestigt. Die Steckverbindungen befinden sich berührungssicher unterhalb der oberen Ränder der Längsseitenwände 3, 4 und der Trennwände 7, 8.

Der Vorsprung 27 geht in einem geringen Abstand vom Verlängerungsabschnitt 11 in einen parallel zu diesem verlaufenden Wandabschnitt 32 über, der sich bis zum Bodenteil 5 erstreckt. Mit dieser Ausbildung des Gehäuses 2 wird erreicht, daß der Verlängerungsabschnitt 11 länger als der Verlängerungsabschnitt 10 ist, der am Bodenteil 5 endet. Um das Gehäuse 2 mit der Zwischenplatte 20 verbinden zu können, muß der Abstand zwischen den Verlängerungsabschnitten 10, 11 vergrößert werden. Dies ist aufgrund der elastischen Eigenschaften der Verlängerungsabschnitte 10, 11 möglich. Aufgrund der größeren Länge des Verlängerungsabschnitts 11 läßt sich dieser stärker zur Seite auslenken als der Verlängerungsabschnitt 10. Es ist möglich, den Verlängerungsabschnitt 10 nur geringfügig über das Bodenteil 5 hinausragen zu lassen, da der Verlängerungsabschnitt 10 keine oder nur eine kleine Auslenkung beim Montieren des Gehäuses 2 auf der Zwischenplatte 20 ausführen muß. Auf diese Weise läßt sich das Gehäuse raumsparend ausbilden. Eine weitere Raumeinsparung ergibt sich durch die Verwendung von Kupfer als Stromschienenmaterial, da durch die hohe Leitfähigkeit große Ströme auch bei geringen Abmessungen transportiert werden können.

Die Trennwand 7 weist vor dem Übergang in das Bodenteil 5 einen verbreiterten Wandabschnitt 33 auf, in dem sich eine Aussparung 34 für selbstschneidende Schrauben befindet. Die Aussparung 34, die von Stirnseite zu Stirnseite des Gehäuses 2 verläuft, hat eine schlitzförmige Öffnung im Bodenteil 5.

An den Stirnseiten des Gehäuses 2 sind Deckel 35 mittels nicht näher dargestellter Senkkopfschrauben angeschraubt. Jeder Deckel 35 enthält Zwei Bohrungen, die in gleicher Hohe nebeneinander angeordnet sind.

In einem Gehäuse 2 können auch Stromschienen in Reihe hintereinander angeordnet werden. Da die Stromschienen dann für unterschiedliche Potentiale vorgesehen sind, werden sie durch Trennwände 37 voneinander isoliert.

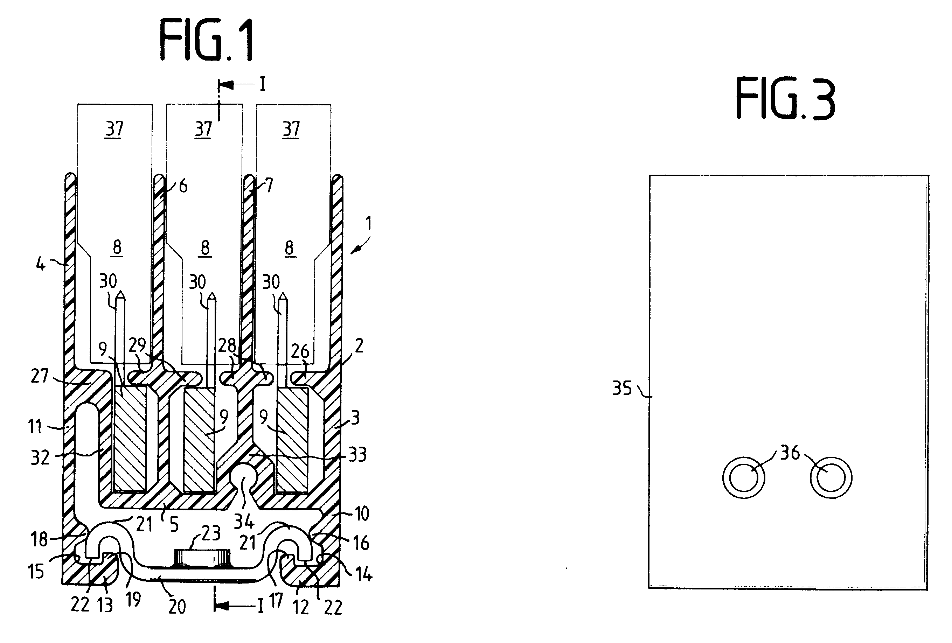

Der Träger 25 kann vorzugsweise in einem Schrank für elektrische bzw. elektronische Geräte angeordnet sein. Die Figur 1 zeigt eine paketierte Sammelschiene 1 mit drei Stromschienen 9, die beispielsweise von den drei Phasen des Drehstromnetzes gespeist werden. Es ist möglich, als Träger 25 die Rahmen eines Schaltschranks zu verwenden, deren Rahmenprofile für die Befestigung von Einsätzen, Einschüben, Geräten sowie von Stromversorgungseinrichtungen für diese Geräte ausgebildet sind. Diese Art von Schaltschränken enthalten Hohlprofile mit Lochreihen, mit denen z. B. die Zwischenplatten 20 verbunden werden, auf die die paketierten Sammelschienen aufgesteckt werden. Ein derartiger Schrank ist in der Patentanmeldung P 34 04 349.7 vorgeschlagen worden.

Die paketierte Sammelschiene 1 wird zur Montage an einer Befestigungsplatte 20 von Hand mit den Verlängerungsabschnitten 10, 11 gegen die Längsränderabschnitte gedrückt. Dabei federt insbesondere der Verlängerungsabschnitt 11 zur Seite, so daß die Enden 12, 13 über die Längsränderabschnitte 21 gleiten können.

Wenn sich die Rastvorsprünge 17, 19 unterhalb der Stirnseiten 22 befinden, vermindert sich die Spreizung der Verlängerungsabschnitte 10, 11. Hierbei rasten die Längsränderabschnitte 21 zwischen den Vorsprüngen 16, 17 bzw. 18, 19 ein.

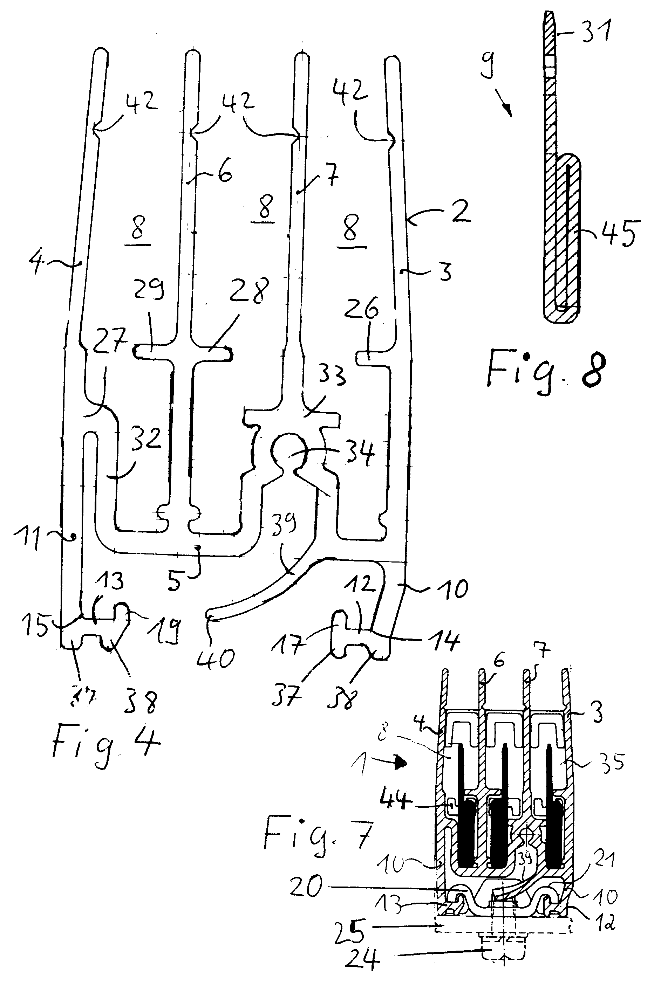

Die in Figur 4 dargestellte Ausführungsform eines Kunststoffgehäuses 2 weist nicht die Rastvorsprünge 16, 18 auf. Gleiche Elemente sind mit gleichen Bezugzeichen versehen. Die abgewinkelten, einander zugewandten Enden 12, 13 enthalten jeweils ein Paar paralleler Auflagevorsprünge 37, 38, mit denen das Gehäuse 2 auf dem Träger 25 aufliegt. Die Auflagevorsprünge 37, 38 ragen nach unten. In den Raum zwischen den Verlängerungsabschnitten 10, 11 ragen jeweils die Vorsprünge 17, 19. Vom Bodenteil 5 geht als Vorsprung eine federnde Zunge 39 aus. Die Basis der federnden Zunge 39 befindet sich an derjenigen Stelle, an der die zu der Aussparung 34 verlaufende Öffnung beginnt. Die Zunge 39 ragt schräg zur Ebene des Bodenteils 5 in den Raum zwischen den Verlängerungsabschnitten 10, 11. In entspannter Lage befindet sich das Ende 40 der Zunge in Höhe der abgewinkelten Enden 12, 13.

Wenn eine Zwischenplatte 20 in den von den Verlängerungsabschnitten 10 und 11 und den Enden 12, 13 begrenzten Raum eingefügt wird, legt sich die Zunge 39 gegen die Zwischenplatte 20 und drückt diese mit den Stirnseiten 22 der Längsränderabschnitte 21 an die Enden 12, 13 an. Die Zwischenplatte 20 wird auf diese Weise in ihrer Lage fixiert. Die Vorsprünge 17 und 19 ragen dabei in den von den krallenartig abgebogenen Längsränderabschnitten begrenzten Raum. Damit wird die Zwischenplatte in einer definierten Bezugslage angeordnet. Die von der Zunge 39 gehaltene Zwischenplatte 20 bildet mit der paketierten Sammelschiene eine für sich handhabbare Einheit, die bedarfsweise mit dem Träger 25 verbunden werden kann.

Eine besonders feste Verbindung zwischen dem Träger 25 und dem Gehäuse 2 läßt sich erreichen, wenn die Schraube 24 so stark angezogen wird, daß die Enden 12, 13 fest zwischen den Stirnseiten 22 und dem Träger 25 eingespannt sind. Dabei können sich die elastischen Vorsprünge 37, 38 etwas verformen, woduch eine federnde Einspannung erreicht wird.

Die Verbindung zwischen dem Gehäuse 2 und der Zwischenplatte 20 kann vor oder nach dem Anschrauben der Zwischenplatte 20 am Träger 25 erfolgen. Wenn das Gehäuse 2 mit einer bereits an einem Träger 25 befestigten Zwischenplatte 20 verbunden werden soll, muß die Zwischenplatte 20 lose über der Schraube 24 am Träger 25 angebracht sein.

Nach dem oben bereits erläuterten Einschnappen der Enden 12, 13 in ihre die Zwischenplatte 20 haltende Stellung kann die Schraube 24 stärker angezogen werden. Die Figur 5 zeigt eine Zwischenplatte 20, bei der in Höhe der Gewindebohrung 23 beiderseits die Längsränderabschnitte 21 durch Schlitze 46 unterbrochen sind. Die Schlitze 46 dienen zur Aufnahme von Endplatten 41, in die sich das in Figur 6 dargestellte Ausführungsbeispiel eines Deckels gabelt. Die Endplatten 41 beginnen unterhalb des Bodenteils 5, d. h. die Stromschienen 9 werden von den Deckeln 35 vollständig bedeckt.

Wenn die Endplatten 41 in die Schlitze 46 ragen, wird die Zwischenplatte 20 in Längsrichtung des Gehäuses 2 in ihrer Stellung fixiert. Diese Art der Fixierung wird bei paketierten Stromschienen zweckmäßigerweise nur an einem Ende vorgenommen. Nahe am anderen Ende wird die Zwischenplatte 21 ein Stück gegen das Sammelschienenende nach innen verschoben. Diese Art der Befestigung läßt Längenänderungen des Kunststoffgehäuses 2 zu. Aufgrund von Schwankungen der Umgebungstemperatur und von wechselnden Strombelastungen der Sammelschienen, die unterschiedliche Temperaturen in den Sammelschienen hervorrufen, sind die Kunststoffgehäuse in weiten Bereichen schwankenden Temperaturen ausgesetzt. Hierbei treten Längenänderungen auf, die bei der oben beschriebenen Befestigung mittels Zwischenplatten, die ein Festlager und ein Loslager bilden, nicht zu unerwünschten Spannungen bzw. Beanspruchungen der Kunststoffgehäuse 2 führen. Falls paketierte Sammelschienen sehr großer Länge benötigt werden, können auch mehrere Loslager durch Zwischenplatten 20 längs der Sammelschiene 1 angeordnet werden.

Die Trennwände 6, 7 und die Längsseitenwände 3, 4 haben nahe an ihren oberen Enden jeweils Sollbruchstellen 42, um die Höhen verkürzen zu können.Die Höhe der Längsseitenwände 38 4 und der Trennwände 6, 7 richtet sich nach der Hohe der Spannung der Sammelschienen 9. Bei kleineren Nennspannungen und damit kleineren vorgeschriebenen Luft- und Kriechstrecken zwischen den Sammelschienen 9 können die über den Sollbruchstellen 42 liegenden Wandabschnitte abgebrochen werden, um im Schalt- bzw. Geräteschrank Raum für andere Anordnungen zu sparen.

Die Figur 7 zeigt einen Querschnitt einer an einer Stirnseite durch einen Deckel 35 abgedeckten paketierten Sammelschiene. Der Deckel 35 enthält Vorsprünge 43, die je in die Kammern 8 ragen und sich an Wandabschnitte der Längsseitenwände 3, 4 und der Trennwände 6, 7 anlegen. Damit ist der Deckel 35 in seiner Lage fixiert, obwohl er nur mit einer Schraube am Gehäuse 2 befestigt ist. Bedarfsweise können weitere Vorsprünge 44 in einer anderen Höhenlage am Deckel 35 angeordnet sein.

Besonders vorteilhaft ist bei der oben beschriebenen Anordnung die Möglichkeit, die Sammelschiene an ebenen, mit Gewindebohrungen versehenen Tragschienen leicht und schnell befestigen zu können. Es müssen keine an die Sammelschiene angepaßten Tragschienenkonstruktionen vorgesehen sein.

Besonders zweckmäßig ist es, wenn die Stromschienen 9 aus einem mehrfach um 180° gebogenen Kupferband bestehen. Vorzugsweise handelt es sich bei dem Material um halbhartes und hartes Kupfer. Eine derartige Härte ist notwendig, um Anschlußelemente, z. B. Flachsteckzungen, in Faston-Technik verwenden zu können. Eine günstige Ausführungsform besteht aus einem 0,8 mm starken Kupferband, das zwei in Schierlenlängsrichtung verlaufende Faltungen um 180° aufweist. Das Kupfermaterial hat die Type Cu 57 F 25 oder Cu 57 F 37 und weist nach DIN 40 500 eine Mikrohärte von 70 bis 120 auf. Durch die Verwendung von Kupfer kann wegen dessen hoher Leitfähigkeit bei kleinem Querschnitt eine große Strombelastung zugelassen werden. Aufgrund des kleinen Querschnitts ergeben sich kleinere Abmessungen der paketierten Sammelschiene, deren Kunststoffgehäuse 2 vorzugsweise als extrudiertes Teil hergestellt wird. Es hat sich gezeigt, daß Material der oben angegebenen Zusammensetzung trotz der Faltung um 180° an den Biegestellen nur solche Verformungen aufwies, die für den Einsatz als Stromschiene unkritisch sind. Als Material für die Stromschienen 9 eignet sich auch silberlegiertes Kupfer der Type CuAg 0,1. Bei einer Breite von 2,7 mm und einer Höhe des Basiskörpers von 10 bis 11 mm ergibt sich bei Material der oben beschriebenen Type und doppelter Faltung eine Strombelastbarkeit von etwa 100 A.

Die Stifte 30 und Messer 31 sind durch Stanzen des Kupferbands hergestellt. Die Stromschienen 9 enthalten einen Basiskörper 45, dessen Querschnitt durch die Faltungen auf die für die gewünschte Strombelastung notwendige Fläche vergrößert ist. Von besonderer Bedeutung ist der geringe Aufwand, um die Stromschienen 9 zu fertigen.

Die Dicke des Kupferbandes für die Stromschienen kann im Bereich 0,8 mm bis 1,1 mm liegen.

Die oben beschriebene Stromschiene 9 läßt sich vorteilhafterweise auch bei Gehäusen, die einen anderen Aufbau als das oben erläuterte Kunststoffgehäuse haben, einsetzen, wenn wirtschaftlich herstellbare Stromschienen mit Flachsteckelementen benötigt werden. Es ist auch möglich, die Stromschienen 9 durch isolierende Stützen an zwei oder mehr Stellen zu halten und im übrigen blank zu lassen. Eine solche Anordnung bietet sich an, wenn die Spannungen niedrig sind oder wenn die Stromschienen berührungssicher in Gehäusen montiert sind.

**Patentansprüche**

1.  Paketierte Sammelschiene mit einem Kunststoffgehäuse (2), bestehend aus einem Bodenteil (5), zwei Längsseitenwänden (3, 4), wobei die Längsseitenwände über das Bodenteil (5) hinausragende elastische Verlängerungsabschnitte (10, 11) aufweisen, die jeweils einander zugewandte abgewinkelte Enden (12, 13) aufweisen, wobei an die Innenflächen der abgewinkelten Enden mindestens ein Paar mit einem Träger (25) verbindbare Befestigungsteile (20), die kürzer als das Kunststoffgehäuse (2) sind, mit Längsränderabschnitten (21) unter der durch einen in den Raum zwischen den Verlängerungsabschnitten ragenden federnden Vorsprung erzeugten Federspannung andrückbar sind, **dadurch gekennzeichnet,** dass die Längsseitenwände (3, 4) parallel zueinander und parallel zu im Inneren des Kunststoffgehäuses (2) angeordneten Trennwänden (7, 8) verlaufen, durch die Kammern gebildet werden, in denen jeweils Stromschienen (9) isoliert voneinander angeordnet sind, dass von den abgewinkelten Enden (12, 13) Vorsprünge (17, 19) in das Innere der Längsränderabschnitte (21) ragen, und dass eine der Trennwände (7) vor dem Übergang zum Bodenteil (5) mit einem verbreiterten Wandabschnitt (33) versehen ist, in dem sich eine längliche Ausnehmung (34) für selbstschneidende Schrauben befindet, mit denen an den Stirnseiten des Kunststoffgehäuses (2) Deckel (35) anschraubbar sind, die sich im Raum unterhalb des Bodenteils der Kammern (8) in zwei Endplatten (41) gabeln, die je in einen Schlitz (46) in den Längsränderabschnitten (21) einsetzbar sind.

2.  Sammelschiene nach Anspruch 1, **dadurch gekennzeichnet,** dass der in den Raum zwischen den Verlängerungsabschnitten (10, 11) ragende, federnde Vorsprung als vom Bodenteil (5) der Kammern (8) schräg ausgehende Zunge (39) ausgebildet ist.

3.  Sammelschiene nach Anspruch 1 oder 2, **dadurch gekennzeichnet,** dass die Zwischenplatten (20) wenigstens mit einer in der Mitte angeordneten Gewindebohrung (23) versehen sind.

4.  Sammelschiene nach einem der vorhergehenden Ansprüche, **dadurch gekennzeichnet,** dass ein Quervorsprung (27) an einer Längsseitenwand (4) in einem eine äussere Kammer für die Stromschienen (9) begrenzenden Wandabschnitt (32) übergeht, der bis zum Bodenteil (5) im Abstand vom Verlängerungsabschnitt (11) parallel zu diesem verläuft.

5.  Sammelschiene nach einem der vorhergehenden Ansprüche, **dadurch gekennzeichnet,** dass die Stromschienen (9) vorspringende Stifte (30) und/oder Messer (31) aufweisen, die im Abstand voneinander angeordnet sind und nicht über die Längsseitenwände (3, 4) und stirnseitigen Deckel (35) hinausragen.

6.  Sammelschiene nach einem der vorausgehenden Ansprüche, **dadurch gekennzeichnet,** dass die vorspringenden Stifte (30) und/oder Messer (31) der Stromschiene (9) an einem Basiskörper (45) angebracht sind, der aus einem mindestens einmal um 180 ° in Längsrichtung der Schiene gefalteten Kupferblech besteht.

7.  Sammelschiene nach Anspruch 6, **dadurch gekennzeichnet,** dass das Kupferblech aus hartem oder halbhartem Kupfer besteht und eine Stärke im Bereich von 0,8 mm bis 1,1 mm hat.

8. Sammelschiene nach Anspruch 6 oder 7,
**dadurch gekennzeichnet,**
dass das Kupferblech aus silberlegiertem Kupfer besteht.

## Claims

1. Packaged bus bar comprising a synthetic material housing (2) consisting of a base part (5) and two longitudinal side walls (3, 4), wherein the longitudinal side walls have resilient prolongation portions (10, 11) which project beyond the base part (5) and which have angled ends (12, 13) facing one another, and wherein at least one pair of fastening members (20), which are connectible with a carrier (23) and which are shorter than the synthetic material housing (2), are pressable by longitudinal edge portions (21) against the inner surfaces of the angled ends under the spring force generated by a resilient projection projecting into the space between the prolongation portions, characterised thereby that the longitudinal side walls (3, 4) extend parallelly to one another and parallelly to partition walls (7, 8) which are arranged in the interior of the synthetic material housing (2) and by which are formed the chambers in which respective current rails (9) are arranged insulated from one another, that projections (17, 19) project from the angled ends (12, 13) into the interior of the longitudinal edge portions (21), and that one of the partition walls (7) is provided ahead of the transition to the base part (5) with a widened wall portion (33) in which is disposed an elongate recess (34) for self-tapping screws by which covers (35) are screwable to the front ends of the synthetic material housing (2), which covers fork off in the space below the base part of the chambers (8) into two end plates (41) which are each insertable into a respective slot (46) in the longitudinal edge portions (21).

2. Bus bar according to claim 1, characterised thereby that the resilient projection projecting into the space between the prolongation portions (10, 11) is constructed as a tongue (39) proceeding obliquely from the base part (5) of the chambers (8).

3. Bus bar according to claim 1 or 2, characterised thereby that the intermediate plates (20) are provided at least with a threaded bore (23) arranged in the centre.

4. Bus bar according to one of the preceding claims, characterised thereby that a transverse projection (27) at one longitudinal side wall (4) goes over into a wall portion (32) which bounds an outer chamber for the current rails (9) and which extends up to the base part (5) at a spacing from the prolongation portion (11) and parallelly thereto.

5. Bus bar according to one of the preceding claims, characterised thereby that the current rails (9) have projecting pins (30) and/or blades (31), which are arranged at a spacing from one another and do not project beyond the longitudinal side walls (3, 4) and front end covers (35).

6. Bus bar according to one of the preceding claims, characterised thereby that the projecting pins (30) and/or blades (31) of the current rails (9) are present on a base body (45), which consists of a copper sheet folded at least once through 180° in longitudinal direction of the bar.

7. Bus bar according to claim 6, characterised thereby that the copper sheet consists of hard or semi-hard copper and has a gauge in the range of 0.8 to 1.1 millimetres.

8. Bus bar according to claim 6 or 7, characterised thereby that the copper sheet consists of silver alloy copper.

## Revendications

1. Connecteur bus encapsulé avec un boîtier en matériau synthétique (2) constitué d'une pièce de fond (5), de deux parois latérales longitudinales (3, 4), les parois latérales longitudinales présentant des prolongements (10, 11) élastiques débordant de la pièce de fond (5), ces prolongements présentant chacun des extrémités (12, 13) repliées se faisant face, tandis que sur les faces intérieures des extrémités pliées il est possible, sous la tension élastique créée par une saillie élastique débordant à l'intérieur de l'espace séparant les prolongements, de serrer une paire de pièces de fixation (20) pouvant être reliées à un support (25), qui sont plus courtes que le boîtier en matériau synthétique (2) et qui présentent des bordures longitudinales (21), caractérisé en ce que les parois latérales longitudinales (3,4) s'étendent parallèlement les unes aux autres et parallèlement à des parois de séparation (7,8) disposées à l'intérieur du boîtier en matériau synthétique (2) et forment des chambres dans chacune desquelles une barrette de connexion (9) est installée et isolée des autres, en ce que des saillies (17, 19) débordent des extrémités repliées (12, 13) vers l'intérieur des bordures longitudinales (21) et en ce qu'une des parois de séparation (7) est avant le passage vers la pièce de fond (5) dotée d'un segment de paroi (33) élargi dans lequel se trouve un évidement allongé (34) pour vis auto-taraudeuses grâce auxquelles des couvercles (35) peuvent être vissés sur les parois frontales du boîtier en matériau synthétique (2), ces couvercles se prolongeant dans l'espace situé en dessous de la pièce de fond des chambres (8) en deux plaques d'extrémité (41) pouvant chacune être insérées dans une fente (46) des bordures longitudinales (21).

2. Conecteur bus selon la revendication 1, caractérisé en ce que la saillie élastique débordant dans l'espace situé entre les prolongements (10, 11) se présente sous la forme d'une languette (39) partant obliquement de la pièce de fond (5) de la chambre (8).

3. Connecteur bus selon la revendication 1 ou 2, caractérisé en ce que les plaques intermédiaires (20) sont dotées d'au moins un trou fileté (23) disposé en leur milieu.

4. Connecteur bus selon l'une des revendications précédentes, caractérisé en ce qu'une saillie transversale (27) d'une paroi latérale longitudinale (4) se transforme en un segment de paroi (32) délimitant un logement extérieur de la barrette de connexion (9), ce segment de paroi (32) s'étendant parallèlement au prolongement (11), à écartement de celui-ci, jusqu'à la pièce de fond (5).

5. Connecteur bus selon l'une des revendications précédentes, caractérisé en ce que les barrettes de connexion (9) présentent des tiges (30) et/ou des lames (31) qui en débordent, qui sont disposées à écartement les unes des autres et ne débordent pas au-delà des parois latérales longitudinales (3, 4) ni des couvercles frontaux (35).

6. Connecteur bus selon l'une des revendications précédentes, caractérisé en ce que les tiges (30) et/ou lames (31) débordant des barrettes de connexion (9) sont installées sur un corps de base (45) qui est constitué d'une tôle de cuivre repliée au moins une fois sur 180 degrés dans la direction longitudinale de la barrette.

7. Connecteur bus selon la revendication 6, caractérisé en ce que la tôle de cuivre est constituée de cuivre dur ou semi-dur et possède une épaisseur située dans la plage de 0,8 mm à 1,1 mm.

8. Connecteur bus selon la revendication 6 ou 7, caractérisé en ce que la tôle de cuivre est constituée de cuivre allié à l'argent.

FIG.3

FIG.1

FIG.2

EP 0 180 206 B1

20

27

27

Fig.5

46~

23

~46

35

Fig.6

36

36

41

41

Fig. 4

Fig. 7

Fig. 8